# EUROPEAN PATENT APPLICATION

(11) **EP 4 792 641 A1**
(43) Date of publication of application: **19.08.2026**
(21) Application number: 24877187.5
(22) Date of filing: 09.10.2024
(51) Int. Cl.: A01G 7/00

(54) **METHOD FOR DIAGNOSING WATER STRESS IN PLANT**

(30) Priority: 13.10.2023 JP 2023177144
(71) Applicant: Hiroshima University, Higashihiroshima-shi Hiroshima 739-8511 (JP)
(72) Inventor: TOMINAGA, Jun, Higashihiroshima-shi, Hiroshima 739-8511 (JP)
(74) Representative: Hautier IP - MC/EP
(86) International application number: PCT/JP2024/036058
(87) International publication number: WO 2025/079592

(57) **Abstract**

A method for diagnosing water stress in a plant according to the present invention includes: a step of covering at least a part of a leaf of a plant with a container to form a space between the container and the leaf; a step of bringing a concentration of carbon dioxide inside the space and a concentration of carbon dioxide inside the leaf into equilibrium; a step of measuring the concentration of carbon dioxide inside the space; and a step of determining the plant is under water stress when the concentration of carbon dioxide measured in a dark condition is higher than a reference value.

## Description

### TECHNICAL FIELD

The present invention relates to a method for diagnosing water stress in a plant.

### BACKGROUND ART

Water is a main constituent of land plants and is essential as a solvent or a substrate for chemical reactions in vivo and for the transport of solutes and the maintenance of the turgor pressure. In nature, plants may be under excessive water stress due to drought, but when a state in which plants are under excessive water stress continues, metabolism such as photosynthesis deteriorates, and further, the plants lose their turgor pressures and eventually wither and die. Therefore, in order to prevent the deterioration of the cultivation environment due to such excessive water stress and to adjust the water stress imposed on the plant to an appropriate magnitude, it is necessary to timely supply an appropriate amount of water to the plant while confirming the state of the plant.

However, it is not easy to appropriately determine whether a plant is under water stress. For example, conventionally, whether a plant is under water stress is determined on the basis of intuition and experience of a glower based on a soil water content, an appearance of the plant, and the like.

However, in a method for diagnosing water stress in a plant in which diagnosis is performed depending on a subjective index such as intuition and experience of a glower based on a soil water content, an appearance of a plant, and the like, it is not infrequent to notice the water stress in the plant only after the plant fails to maintain a turgor pressure and withers. For this reason, there is a strong demand for a method for determining whether a plant is under water stress before a change appears in the soil water content, the appearance of the plant, and the like.

Therefore, in recent years, various proposals have also been made for a method for diagnosing water stress for determining whether a plant is under water stress on the basis of an objective index such as scientific data.

For example, Patent Literature 1 discloses a method for measuring a moisture content ratio of soil in which collected soil having a known weight is put into a predetermined amount of an aqueous sucrose solution prepared so as to have a set concentration using water obtained from the place where the soil is collected, and after stirring, the sugar content of the solution obtained by filtration is measured by a sugar content meter or a refractive index meter, the sugar content of the obtained water used for preparation of the aqueous sucrose solution is measured by a sugar content meter or a refractive index meter, the measured sugar content of the solution obtained by filtration is corrected using the measured sugar content of the obtained water as the blank, and the moisture content ratio of the soil (soil water content) is obtained on the basis of the corrected sugar content. In addition, Patent Literature 1 discloses, as a conventional method for measuring the moisture content ratio of soil, a method using a device such as a tensiometer, and what is called a furnace drying method in which the moisture content ratio of soil is determined on the basis of measurement of the weight of the collected soil and the weight after drying the soil in a furnace.

In addition, for example, Patent Literature 2 discloses a plant drought stress diagnostic method including a step of determining an amount of emission of a volatile compound emitted from roots of the plant as a gas or a value based on the amount of emission as an index value. In addition, Patent Literature 2 discloses a method for diagnosing drought stress of a plant without destroying the plant body by adopting an aspect of directly collecting a gas containing a volatile compound generated from roots of the plant, such as a system including a gas collecting unit, a dehumidifying unit, and volatile compound detecting means as constituent members.

In addition, for example, Patent Literature 3 discloses a method for measuring a transpiration rate (E) and an assimilation rate (A) of carbon dioxide in a leaf of a plant, and obtaining biological information of the plant such as water stress from these rates.

### CITATION LIST

### PATENT LITERATURES

[Patent Literature 1] Japanese Laid-Open Patent Publication No. 2016-191583
[Patent Literature 2] Japanese Laid-Open Patent Publication No. 2021-087382
[Patent Literature 3] International Publication No. WO2024/161988

### SUMMARY OF INVENTION

### TECHNICAL PROBLEM

However, the soil water content measured by the method of Patent Literature 1 or the method disclosed in Patent Literature 1 as a conventional method is an indirect indicator of water stress in plants. In addition, the soil water content varies depending on the depth of soil, and the optimum soil water content varies depending on the type of soil, environmental conditions, and growth stage. Therefore, it is difficult to appropriately determine whether a plant is under water stress by using only the soil water content as an index of water stress. Furthermore, in the method of Patent Literature 1 and the method disclosed as the conventional method in Patent Literature 1, it is necessary to collect soil and perform predetermined treatment each time measurement is performed, which takes time and effort.

On the other hand, the drought stress measured by the method of Patent Literature 2 is a direct indicator of water stress in the plant. However, in order to diagnose the water stress in the plant by the former method of Patent Literature 2, it is necessary to collect the roots of the plant, and there is the problem that the plant body is damaged.

Furthermore, according to the latter method of Patent Literature 2, it is possible to determine whether a plant is under water stress without damaging the plant body. However, in this case, a system having a complicated configuration including the gas collecting unit and the dehumidifying unit described above as detecting means is required, and there is the problem that it is not possible to easily determine whether a plant is under water stress.

In addition, in the method of Patent Literature 3, it is possible to easily obtain biological information of the plant such as water stress from the transpiration rate (E) and the assimilation rate (A) of carbon dioxide in the leaf of the plant, but it is required to further easily determine whether a plant is under water stress.

The present invention has been made in view of the above problems, and an object of the present invention is to provide a method for diagnosing water stress that enables easy determination of whether a plant to be diagnosed is under water stress without damaging the plant body and without using a system having a complicated configuration.

### SOLUTION TO PROBLEM

In order to achieve the above object, the present inventors have extensively conducted studies, and resultantly found that when at least a part of a leaf of a plant is covered with a container to form a space between the container and the leaf, the concentration of carbon dioxide inside the space serves as an index indicating a water stress state of the plant, thereby completing the present invention.

Specifically, a method for diagnosing water stress according to the present invention includes: a step of covering at least a part of a leaf of a plant with a container to form a space between the container and the leaf; a step of bringing a concentration of carbon dioxide inside the space and a concentration of carbon dioxide inside the leaf into equilibrium; a step of measuring the concentration of carbon dioxide inside the space; and a step of determining that a plant is under water stress when the concentration of carbon dioxide inside the space measured in a dark condition is higher than a reference value.

According to this diagnosis method, at least a part of a leaf of a plant is covered with a container to form a space between the container and the leaf, a concentration of carbon dioxide inside the space and a concentration of carbon dioxide inside the leaf are brought into equilibrium, and the concentration of carbon dioxide inside the space is measured. The measured concentration (Cᵢ₍ₘ₎) of carbon dioxide inside the space can therefore be treated as the concentration (Cᵢ) of carbon dioxide inside the leaf as shown in Formula (1) below. When the concentration (Cᵢ₍ₘ₎) of carbon dioxide measured in a dark condition is higher than a reference value, it can be determined that a plant is under water stress. ${C}_{i \left(m\right)} = {C}_{i}$

(In Formula (1), Cᵢ₍ₘ₎ represents the concentration of carbon dioxide inside the space, and Cᵢ represents the concentration of carbon dioxide inside the leaf.)

Here, a principle will be described that the concentration (Cᵢ) of carbon dioxide inside the leaf in a dark condition serves as an index of the water stress state of the plant. First, plants respire throughout the day and photosynthesize under light conditions such as the daytime. In the daytime, plants take in carbon dioxide from the atmosphere through stomata of leaves and perform photosynthesis. At this time, water in the living body is released to the atmosphere through the stomata as water vapor by transpiration. On the other hand, in dark conditions such as nighttime, carbon dioxide generated by respiration of the plant is released from the inside of the leaf to the atmosphere through stomata together with water vapor. Here, the case where a plant is under water stress (such as stress due to water shortage) is considered. In this case, in order to suppress water loss in the living body, the plant closes the stomata of leaves narrower than in the case where a plant is not under water stress. As a result, at nighttime when photosynthesis is not performed, carbon dioxide generated by respiration of the plant is less likely to be released from the inside of the leaf to the atmosphere through stomata, and there is a specific tendency that the concentration (Cᵢ) of carbon dioxide inside the leaf increases. Therefore, the concentration (Cᵢ₍ₘ₎) of carbon dioxide (as described above, it can be treated as the concentration (Cᵢ) of carbon dioxide inside the leaf) inside the space measured in a dark condition is an index of the water stress state of the plant. As described above, the present inventors have found that the concentration (Cᵢ) of carbon dioxide inside the leaf in a dark condition is an index of the water stress state of the plant, thereby completing the present invention.

In addition, according to this diagnosis method, since an implementer is not required to perform a special operation other than forming a space between the container and the leaf by covering at least a part of the leaf of the plant with the container, it is possible to easily determine whether the plant is under water stress without damaging the plant body and without using a system having a complicated configuration.

As described above, according to the method for diagnosing water stress of the present invention, it is possible to easily determine whether a plant is under water stress without damaging the plant body and without using a system having a complicated configuration. Furthermore, by using the method for diagnosing water stress according to the present invention, it is also possible to control the cultivation environment in order to maintain a state in which the plant is not under water stress or a state in which the plant is under appropriate water stress.

In the step of measuring the concentration of carbon dioxide inside the space, the concentration of carbon dioxide may be continuously measured to derive a temporal change in the concentration of carbon dioxide.

According to this diagnosis method, since the measurement of the concentration of carbon dioxide is continuously performed to derive a temporal change in the concentration of carbon dioxide, for example, by comparing the maximum value of the concentration (Cᵢ₍ₘ₎) of carbon dioxide measured in a dark condition with a reference value and further continuously comparing the concentration change every day, it is possible to determine whether the plant is under water stress with higher accuracy.

The reference value may be a reference value determined on the basis of the dark respiration rate of the leaf of the plant to be measured.

Furthermore, the reference value may be determined according to the temporal change described above.

According to this diagnosis method, the reference value is determined according to the temporal change, and for example, the reference value is determined from the maximum value and the minimum value of the concentration (Cᵢ₍ₘ₎) of carbon dioxide measured in a dark condition while referring to the carbon dioxide concentration in a normal state in which it is clear that the plant is not under water stress, so that it is possible to determine whether the plant is under water stress with higher accuracy.

The reference value may be determined by at least one of Formulae (2) and (3) below. $Reference value = {C}_{a} + 1.6 {R}_{dark} / \left({g}_{dark}-{g}_{cut}\right)$ $Reference value = {C}_{a} + 1.6 {R}_{dark} / \left({g}_{min}-{g}_{cut}\right)$

(In Formulae (2) and (3), Cₐ represents the concentration of carbon dioxide in the atmosphere, R_{dark} represents the dark respiration rate, g_{dark} represents the water vapor conductance in a dark condition of the leaf without water stress, g_{cut} represents the water vapor conductance of cuticle, and gₘᵢₙ represents the water vapor conductance of the leaf that has lost turgor pressure, respectively.)

The value gₘᵢₙ in the above formula can generally be measured from the weight loss of the removed leaf. The water supply to the removed leaf is cut off, and the turgor pressure is lost. It is therefore assumed that the stomata are maximally closed. Therefore, in this diagnosis method, the reference value is determined on the basis of the minimum conductance of the leaf when the stomata are most closed due to the water stress in the plant, and it is possible to determine whether the plant is under water stress more simply and with high accuracy.

A plant water stress diagnosis system according to the present invention is a system for performing the above-described method for diagnosing water stress in a plant, the system including: a container configured to cover at least a part of one surface of a leaf of a plant to form a space with the leaf; a sensor in communication with the space to measure a carbon dioxide concentration in the space; and a blower and a condenser configured to circulate air between the space and the sensor.

With the plant water stress diagnosis system according to the present invention, it is possible to freely control the conditions of the environment around the leaf of the plant with an environment control device for controlling the carbon dioxide concentration, the temperature, and the humidity, and for example, it is possible to perform control so as to mimic the external environment, so that it is possible to implement the method for diagnosing water stress according to the present invention.

### ADVANTAGEOUS EFFECTS OF INVENTION

According to the method for diagnosing water stress of the present invention, it is possible to easily determine whether a plant is under water stress to be diagnosed without damaging the plant body and without using a system having a complicated configuration. Furthermore, by using the method for diagnosing water stress according to the present invention, it is also possible to control the cultivation environment in order to maintain a state in which the plant is not under water stress or a state in which the plant is under appropriate water stress.

### BRIEF DESCRIPTION OF DRAWINGS

Fig. 1 is a side view for illustrating a method for diagnosing water stress according to an embodiment of the present invention.
Fig. 2 schematically illustrates a system used in a method for diagnosing water stress according to Example 1.
Fig. 3 shows graphs showing temporal changes in the concentration of carbon dioxide during daytime and nighttime measured by the method for diagnosing water stress according to Example 1.
Fig. 4 schematically illustrates a system used in a method for diagnosing water stress according to Example 2.
Fig. 5 is a graph showing temporal changes in the concentration of carbon dioxide measured by the method for diagnosing water stress according to Example 2.
Fig. 6 schematically illustrates a system used in a conventional method according to a comparative example.
Fig. 7A is a graph showing temporal changes in a transpiration rate (E) measured by a conventional method according to the comparative example, and Fig. 7B is a graph showing temporal changes in an assimilation rate (A) of carbon dioxide measured by the conventional method according to the comparative example.

### DESCRIPTION OF EMBODIMENT

Hereinafter, an embodiment of the present invention will be described with reference to the drawings. The following description of the preferable embodiment is essentially mere exemplification and is not intended to limit the present invention, the method of application thereof, or the application thereof.

### (Method for Diagnosing Water Stress)

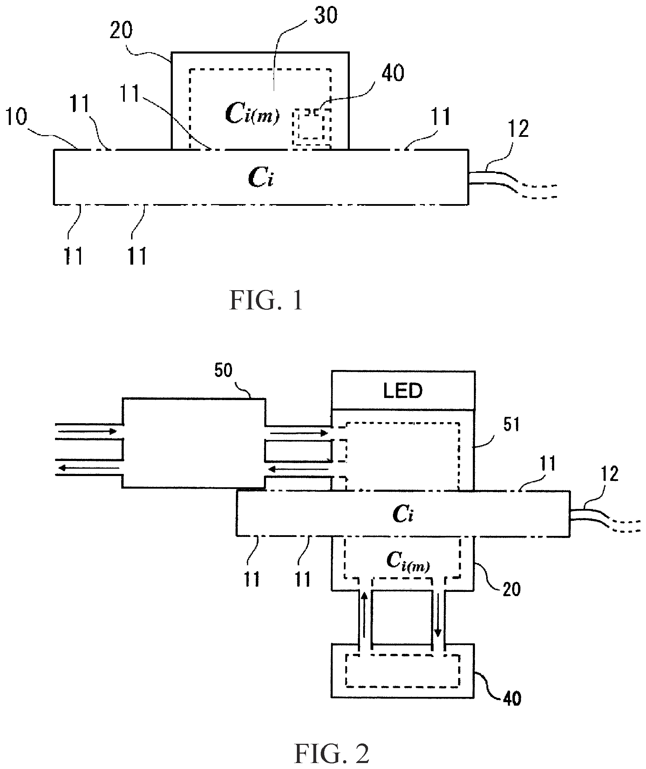

Fig. 1 is a side view for illustrating a method for diagnosing water stress according to an embodiment of the present invention. As shown in Fig. 1, the method for diagnosing water stress according to the present embodiment includes: a step of covering at least a part of a leaf 10 of a plant to be diagnosed with a container 20 to form a space 30 between the container 20 and the leaf 10; a step of bringing a concentration (Cᵢ₍ₘ₎) of carbon dioxide inside the space 30 and a concentration (Cᵢ) of carbon dioxide inside the leaf 10 into equilibrium; a step of measuring the concentration (Cᵢ₍ₘ₎) of carbon dioxide inside the space 30; and a step of determining that the plant is under water stress when the concentration (Cᵢ₍ₘ₎) of carbon dioxide measured in a dark condition is higher than a reference value.

In the present specification, the term "water stress" is used as a concept including stress caused by drying due to drought and an increase in osmotic pressure in the soil due to salt or the like. More specifically, the water stress refers to a state in which the plant can only absorb less water through the roots than usual, and the water supply to the plant body is insufficient. In such a state, the stomata of the plant are closed as compared with the usual state in order to suppress excessive water loss. Water stress inhibits the growth of plants in terms of biology, while in terms of crop production, water stress does not necessarily adversely affect the agricultural produce. For example, in plants such as tomatoes, a case is known in which the quality of fruit is higher when the plant is under moderate water stress. Therefore, by the method for diagnosing water stress according to the present embodiment, it is possible to determine whether a plant is under water stress, and it is also possible to control the cultivation environment in order to maintain a state in which the plant is not under water stress or a state in which the plant is under appropriate water stress.

In the present specification, the term "light condition" refers to a state in which a plant to be diagnosed is exposed to light, particularly a state in which a leaf to be measured for the carbon dioxide concentration is exposed to light. Therefore, the "light condition" means, for example, a state in which sunlight is applied in the daytime or the like, or a state in which the light source is turned on in the case of an indoor space such as a factory. In the present specification, the term "daytime" is used to refer to a period during the light, that is, from sunrise to sunset. In addition, in the present specification, the term "dark condition" refers to a state in which a plant to be diagnosed is not exposed to light, particularly a state in which a leaf to be measured for the carbon dioxide concentration is not exposed to light. Therefore, the "dark condition" means, for example, the nighttime, a state in which sunlight is blocked, or a state in which the light source is turned off in the case of an indoor space such as a factory. The term "nighttime" in the present specification is used to refer conversely to a period from sunset to sunrise.

The method for diagnosing water stress according to the present embodiment involves plants as diagnosis targets and does not involve humans as diagnosis targets. The type of the plant is not limited as long as it is a plant having leaves having stomata. The leaf of the plant is, for example, an epistomatic or hypostomatic leaf or an amphistomatic leaf, preferably an amphistomatic leaf. When the leaf of the plant is an amphistomatic leaf, carbon dioxide can be taken in from the atmosphere and water vapor can be released from the inside of the leaf through stomata in the leaf surface on the opposite side of the side covered with the container, so that the measurement can be performed without hindering photosynthesis or transpiration of the plant. However, even in the case of an epistomatic or hypostomatic leaf, by covering a limited region of the surface on which stomata exist with a container or the like, carbon dioxide can be taken in from the atmosphere or water vapor can be released in another region, and thus the above measurement can be performed. More specifically, in Annals of Botany 89: pp. 183-189, 2002, on the basis of the results of water stress experiments using various species, the relationship between the decrease in photosynthetic activity and the stomatal conductance (parameter representing the stomatal aperture) and the relationship between the parameter related to photosynthetic function and the stomatal conductance are summarized, and it is shown that the relationship between stomatal closure and the decrease in photosynthesis is correlated across species. That is, closure of stomata in response to water shortage is a common response in plants, and thus, it is considered that the method for diagnosing water stress according to the present embodiment can be applied to any plant as long as the plant has leaves having stomata.

In the present embodiment, the step of covering at least a part of the leaf 10 of the plant with the container 20 to form the space 30 between the container 20 and the leaf 10 is performed by covering at least a part of the leaf 10 of the plant with, for example, a glass container 20 having an opening formed in a cylindrical shape as illustrated in Fig. 1.

In the example described above, the glass container 20 is used, but the type is not particularly limited as long as it is formed of a material through which gas cannot pass, and for example, a plastic container 20 may be used. In addition, the container 20 is not limited to an integrally formed container, and for example, although not illustrated, may have a container shape including a film through which a gas cannot pass, and an adhesive layer provided on a surface of the film so as to surround a predetermined region of the surface (for example, on an outer peripheral portion of the surface of the film) and to bond the leaf 10 of the plant to the film.

The size of the space 30 is not particularly limited. However, in order to bring the concentration (Cᵢ₍ₘ₎) of carbon dioxide inside the space 30 and the concentration (Cᵢ) of carbon dioxide inside the leaf 10 into equilibrium as described below, the space 30 is preferably a sealed space including at least a part of stomata 11 of the leaf 10 of the plant as shown in Fig. 1.

In the present embodiment, the step of bringing the concentration (Cᵢ₍ₘ₎) of carbon dioxide inside the space 30 and the concentration (Cᵢ) of carbon dioxide inside the leaf 10 into equilibrium is performed, for example, by allowing the space 30 to stand for a predetermined time immediately after being formed by the container 20 and the leaf 10. The predetermined time is not particularly limited, but can be appropriately changed according to the size of the space 30. For example, it may be determined that the equilibrium is reached when the measurement value of a sensor 40 for measuring the carbon dioxide concentration described below becomes constant and stable.

The step of achieving equilibrium secures time for carbon dioxide to travel between the inside of the space 30 and the inside of the leaf 10 through the stomata 11 of the leaf, and the concentrations of carbon dioxide inside the space 30 and the leaf 10 can be brought into equilibrium. Then, the concentration (Cᵢ₍ₘ₎) of carbon dioxide inside the space after equilibrium is achieved can be treated as representing the concentration (Cᵢ) of carbon dioxide inside the leaf as represented by Formula (1) below. ${C}_{i \left(m\right)} = {C}_{i}$

(In Formula (1), Cᵢ₍ₘ₎ represents the concentration of carbon dioxide inside the space 30 after equilibrium is achieved, and Cᵢ represents the concentration of carbon dioxide inside the leaf 10 of the plant.)

In the present embodiment, the step of measuring the concentration (Cᵢ₍ₘ₎) of carbon dioxide inside the space 30 is performed, for example, by a normal measurement method using the sensor 40 that measures the concentration of carbon dioxide as illustrated in Fig. 1.

As shown in Fig. 1, the installation position of the sensor 40 is not limited as long as the sensor can measure the concentration (Cᵢ₍ₘ₎) of carbon dioxide inside the space 30, and for example, the sensor can be provided inside the container 20. Furthermore, the sensor 40 is not particularly limited, but for example, a commercially available sensor can be used. Furthermore, the sensor 40 also includes a gas analyzer or the like that measures the concentration of carbon dioxide.

In the step of measuring the concentration of carbon dioxide described above, the concentration (Cᵢ₍ₘ₎) of carbon dioxide may be continuously measured to derive a temporal change in the concentration (Cᵢ₍ₘ₎) of carbon dioxide. For example, a temporal change in the concentration of carbon dioxide in a dark condition may be derived by continuous measurement of the concentration of carbon dioxide. According to this method, by comparing the maximum value of the concentration of carbon dioxide measured in a dark condition with a reference value, it is possible to determine whether the plant is under water stress with high accuracy. Further, by continuously performing measurement every day, a difference and a change from day to day can be clearly and easily recognized, so that occurrence of water stress can be easily detected.

In the step of determining that the plant is under water stress in the present embodiment, when the concentration (Cᵢ₍ₘ₎) of carbon dioxide measured in a dark condition is higher than a reference value, it is determined that the plant is under water stress.

In the case where measurement is performed at nighttime as the dark condition, the concentration (Cᵢ₍ₘ₎) of carbon dioxide measured in the dark condition may be, for example, the concentration (Cᵢ₍ₘ₎) of carbon dioxide measured at any time point at nighttime because the nighttime refers to a period from sunset to sunrise.

In the step of determining that the plant is under water stress described above, the following two points can be mentioned as advantages of using the concentration (Cᵢ₍ₘ₎) of carbon dioxide measured in the dark condition. First, in the dark condition, the influence of photosynthesis can be eliminated, and the change in concentration of carbon dioxide inside the leaf can be used as a measure of opening and closing of stomata. In addition, since the fluctuations in the concentration of carbon dioxide measured in the dark condition are larger than the fluctuations in the concentration of carbon dioxide measured in the daytime, the signal becomes relatively large, and the measurement of water stress can be performed with high accuracy.

The reference value is defined as a threshold value for determining whether the plant is under water stress, and when the concentration (Cᵢ₍ₘ₎) of carbon dioxide measured in the dark condition is higher than the reference value, it is determined that the plant is under water stress. The reason why such determination is possible is that when the plant is under water stress, in order to suppress water loss in the living body, the plant closes the stomata of leaves narrower than in the case where the plant is not under water stress. As a result, in the dark condition when photosynthesis is not performed, carbon dioxide inside the leaf 10 generated by respiration of the plant is not released to the outside through stomata, and the concentration (Cᵢ) of carbon dioxide inside the leaf 10 increases. That is, since the higher the concentration (Cᵢ) of carbon dioxide inside the leaf 10, the more the plant is under water stress, it can be determined that the plant is under water stress when the concentration of carbon dioxide is higher than the reference value. However, as represented by the production of tomato fruit and the like, it is sometimes preferable that moderate water stress is being imposed in crop cultivation. Therefore, after it is determined that a plant is under water stress by comparison with a reference value, the degree of water stress in the plant can be further measured on the basis of a difference from the reference value, and the like, as appropriate.

In addition, when deriving a temporal change in the concentration of carbon dioxide in the step of measuring the concentration (Cᵢ₍ₘ₎) of carbon dioxide described above, the reference value may be determined by the temporal change. In this case, the reference value may be determined on the basis of, for example, the maximum value and the minimum value of the concentration (Cᵢ₍ₘ₎) of carbon dioxide measured in the dark condition. Alternatively, the reference value can also be a carbon dioxide concentration measured on a day on which the plant is clearly not under water stress, such as after watering.

Furthermore, the reference value may be determined by Formula (2) or (3) below. This reference value is calculated on the basis of water vapor conductance or the like of a leaf without water stress, and it is possible to determine whether the plant is under water stress with high accuracy. $Reference value = {C}_{a} + 1.6 {R}_{dark} / \left({g}_{dark}-{g}_{cut}\right)$ $Reference value = {C}_{a} + 1.6 {R}_{dark} / \left({g}_{min}-{g}_{cut}\right)$

(In Formulae (2) and (3), Cₐ represents the concentration of carbon dioxide in the atmosphere, R_{dark} represents the dark respiration rate, g_{dark} represents the water vapor conductance in a dark condition of the leaf without water stress, g_{cut} represents the water vapor conductance of cuticle, and gₘᵢₙ represents the water vapor conductance of the leaf that has lost turgor pressure, respectively.) Note that gₘᵢₙ can be determined from the rate at which a leaf separated from the plant body loses weight (weight method), and specifically, since the stomata are closed and the decrease rate becomes gradual and constant, gₘᵢₙ can be determined from the decrease rate at that time, but other known methods such as a gas exchange method can also be used.

It may be determined that the plant is under water stress when the concentration (Cᵢ₍ₘ₎) of carbon dioxide measured as described above is higher than the reference value calculated from Formula (2) or (3) above. In addition, since there is generally a relationship of g_{cut} < gₘᵢₙ < g_{dark}, when expressed as the strength of water stress, the order is as follows: atmospheric concentration to reference value of Formula (2) < reference value of Formula (2) to reference value of Formula (3) < reference value of Formula (3) or more. Therefore, for example, using both the reference values calculated from Formulae (2) and (3), the degree of water stress may be determined such that when the measured concentration (Cᵢ₍ₘ₎) of carbon dioxide is higher than the reference value calculated from Formula (3), strong water stress is being imposed, and when the measured concentration (Cᵢ₍ₘ₎) of carbon dioxide is between the reference value calculated from Formula (2) and the reference value calculated from Formula (3), mild to moderate water stress is being imposed.

In the method for diagnosing water stress according to the present embodiment, as shown in Fig. 1, at least a part of the leaf 10 of the plant is covered with the container 20 to form the space 30 between the container 20 and the leaf 10, the concentration (Cᵢ₍ₘ₎) of carbon dioxide inside the space 30 and the concentration (Cᵢ) of carbon dioxide inside the leaf 10 are brought into equilibrium, and the concentration (Cᵢ₍ₘ₎) of carbon dioxide inside the space 30 is measured. The measured concentration (Cᵢ₍ₘ₎) of carbon dioxide inside the space 30 can therefore be treated as the concentration (Cᵢ) of carbon dioxide inside the leaf 10 as shown in Formula (1) below. When the concentration (Cᵢ₍ₘ₎) of carbon dioxide measured in a dark condition is higher than a reference value, it can be determined that the plant is under water stress. ${C}_{i \left(m\right)} = {C}_{i}$

(In Formula (1), Cᵢ₍ₘ₎ represents the concentration of carbon dioxide inside the space, and Cᵢ represents the concentration of carbon dioxide inside the leaf.)

In addition, according to this diagnosis method according to the present embodiment, since an implementer is not required to perform a special operation other than forming the space 30 between the container 20 and the leaf 10 by covering at least a part of the leaf 10 of the plant with the container 20 as shown in Fig. 1, it is possible to easily determine whether the plant is under water stress without damaging the plant body and without using a system having a complicated configuration.

As described above, according to the method for diagnosing water stress of the present embodiment, it is possible to easily determine whether a plant to be diagnosed is under water stress without damaging the plant body and without using a system having a complicated configuration. Furthermore, by using the method for diagnosing water stress according to the present invention, it is also possible to maintain a state in which the plant is not under water stress or a state in which the plant is under appropriate water stress or to control the cultivation environment in order to maintain such a state.

### EXAMPLES

Hereinafter, examples for describing in detail the method for diagnosing water stress in a plant according to the present invention will be described.

### (Diagnosis System of Example 1)

Fig. 2 schematically illustrates a system used in a method for diagnosing water stress according to Example 1. First, a hole was provided in the bottom of a container 20, and a carbon dioxide analyzer LI-850 (LI-COR, Inc.) functioning as the sensor 40 and the container 20 were connected via a small blower and a condenser (both of which are not shown, see arrows in Fig. 2), and the air in the container 20 was circulated to the carbon dioxide analyzer. A lower portion of a chamber 51 of a commercially available plant photosynthesis comprehensive analysis system LI-6800 (LI-COR, Inc.) was removed, and a main body portion connected to the lower portion of the chamber was blocked with a rubber sheet (not illustrated). By covering with the chamber 51 the same area as the leaf area covered with the container 20, the diagnosis system according to the example was completed. In the present example, the carbon dioxide concentration, the temperature, the humidity, and the like in the chamber 51 were controlled using an environment control device 50 of the plant photosynthesis comprehensive analysis system LI-6800, and the inside of the chamber 51 was controlled to imitate a predetermined external environment.

### (Example 1: Diagnosis 1 of Water Stress)

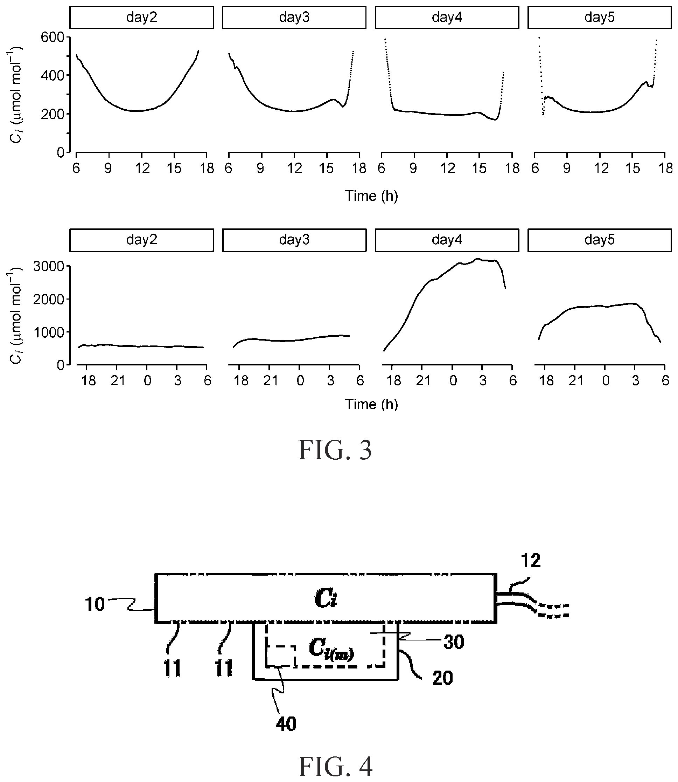

A sunflower, whose leaves are amphistomatic leaves, was selected as a plant to be diagnosed, and a leaf of the sunflower cultivated in a nursery pot was covered with a window (3 cm × 3 cm) of the chamber of the measurement system, so that a space was formed between the container 20 and the leaf 10 (see Fig. 2). Subsequently, after waiting for 5 minutes until the concentration (Cᵢ) of carbon dioxide inside the leaf 10 and the concentration (Cᵢ₍ₘ₎) of carbon dioxide inside the space reached equilibrium, the concentration (Cᵢ₍ₘ₎) of carbon dioxide inside the space was measured with the carbon dioxide analyzer (LI-850 IRGA, reference sign 40 in Fig. 2). The measurement period was six days from day 0 to day 5, measurement was started at 6:00 AM on day 0, and the measurement was ended at 6:00 AM on day 5. In addition, the water supply was suspended from 18:00 on day 0, the suspension was continued until 18:00 on day 4, and then the suspension of water supply was terminated. In addition, at 18:00 on day 4, the plant was watered until the soil in the nursery pot was saturated. A graph was created with the concentration (Cᵢ₍ₘ₎) of carbon dioxide inside the space measured during the above period (treated as the concentration (Cᵢ) of carbon dioxide inside the leaf) (µmolmol⁻¹) on the vertical axis and the time (h) on the horizontal axis. The results are shown in Fig. 3. Finally, the concentrations of carbon dioxide measured at 0:00 at nighttime from day 3 to day 5 were compared with a reference value to determine whether the plant was under water stress. The reference value was a value at 0:00 at nighttime on day 2 at which it was considered that water stress was not imposed yet. The determination results are shown in Table 1 below.

**Table 1**

| Diagnosis results of water stress in sunflower | | | |
|---|---|---|---|
| | **day3** | **day4** | **days** |
| **Sunflower** | **Water stress imposed** | **Water stress imposed** | **Water stress imposed** |

### (Results)

As described above, the results of executing the method for diagnosing water stress in the plant are shown in Fig. 3 and Table 1. Note that Fig. 3 illustrates measurement results from day 2 to day 5, and the upper side of Fig. 3 illustrates daytime results from 6:00 at sunrise to 18:00 at sunset, and the lower side of Fig. 3 illustrates nighttime results from 18:00 at sunset to 6:00 at sunrise on the next day. In addition, in the operation of covering at least a part of the leaf of the plant by mounting the diagnosis system, the leaf of the plant was not damaged.

First, as shown in Fig. 3, it was confirmed that the change in the concentration of carbon dioxide (upper side in Fig. 3) inside the leaf in the daytime was relatively smaller than the change in the concentration of carbon dioxide (lower side in Fig. 3) inside the leaf at nighttime. For this reason, it was confirmed that it is preferable to perform water stress diagnosis of sunflowers using the concentration of carbon dioxide inside the leaves at nighttime. As shown in Table 1 and Fig. 3, in day 3 to day 5, Cᵢ₍ₘ₎ at nighttime (0:00) of day 2 as the reference value was exceeded, and it was determined that the plant was under water stress. In addition, it can be seen from Fig. 3 that as the drought progresses from day 3 to day 4, Cᵢ₍ₘ₎ increases, and the water stress increases. Further, it can be seen that since the watering was performed at 18:00 on day 4, Cᵢ₍ₘ₎ at nighttime on day 5 was smaller than on day 4, and the water stress was also reduced.

The determination based on the reference value calculated by Formula (2) or (3) described above will also be considered below. $Reference value = {C}_{a} + 1.6 {R}_{dark} / \left({g}_{dark}-{g}_{cut}\right)$ $Reference value = {C}_{a} + 1.6 {R}_{dark} / \left({g}_{min}-{g}_{cut}\right)$

Here, as general values described in the previous literature, R_{dark} = 2 µmol m⁻² s⁻¹ (Atkin et al., New Phytol 206(2): 614-636, 2015), g_{cut} = 0.23 mmol m⁻² s⁻¹, g_{dark} = 20.7 mmol m⁻² s⁻¹, and gₘᵢₙ = 2.5 mmol m⁻² s⁻¹ (Duursma et al., New Phytol 221(2): 693-705, 2019, with the proviso that for the conductance, only one side of the leaf was measured in the present example, and thus a value obtained by multiplying the numerical value for both sides in the literature by 0.5 was used) were used. In this case, assuming that the atmospheric concentration is 500 µmolmol⁻¹, the reference value according to Formula (2) is 656 µmolmol⁻¹, and the reference value according to Formula (3) is 1,922 µmolmol⁻¹.

As shown in the lower side of Fig. 3, a signal was observed in which the concentration (Cᵢ) of carbon dioxide inside the leaf increased in an arc from 18:00, which was the sunset, on day 3 three days after the water supply to the plant was suspended to 6:00, which was the sunrise, on the fourth day, that is, at nighttime. In addition, it was confirmed that the concentration (Cᵢ) of carbon dioxide in this signal at 0:00 at nighttime was higher than 656 µmolmol⁻¹, which is the reference value according to Formula (2), as shown in the lower side of Fig. 3. This result indicates that the stomata of the sunflower leaf were narrowly closed due to drought, and it was confirmed that the sunflower was under water stress. However, since the concentration was lower than 1,922 µmolmol⁻¹, which is the reference value according to Formula (3), it is considered that the water stress on day 3 was mild to moderate water stress.

Furthermore, as shown in the lower side of Fig. 3, it was observed that the concentration (Cᵢ) of carbon dioxide inside the leaf at nighttime on day 5, which was the next day of day 4 when the watering of the plant was started, was significantly reduced as compared with the concentration (Cᵢ) of carbon dioxide inside the leaf at nighttime on day 4. This indicates that the stomata were opened wider on day 5 than on day 4 by the watering of the sunflower described above, that is, the discharge of carbon dioxide inside the leaf through the stomata was increased, and the accumulation of carbon dioxide in the leaf was reduced. Since the concentrations (Cᵢ) of carbon dioxide inside the leaf at nighttime on day 4 and day 5 were higher than 656 µmolmol⁻¹, which is the reference value according to Formula (2), and were further equal to or higher than 1,922 µmolmol⁻¹, which is the reference value according to Formula (3), it is considered that the water stress on day 4 and day 5 was mild to moderate water stress. From the results of Fig. 3, it is considered that the state of the water stress in the sunflower was alleviated in day 5 as compared with the state on day 4 although the sunflower was still under water stress on day 5.

### (Example 2: Diagnosis 2 of Water Stress)

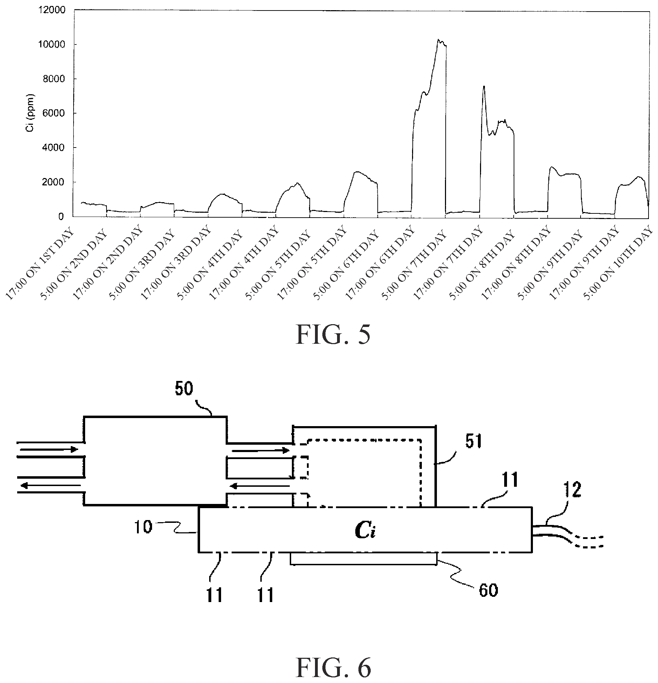

Next, instead of providing an environment control device as in Example 1, diagnosis of water stress was performed in an external environment (in a laboratory) in which one side of the leaf was opened. As a plant to be diagnosed, a sunflower leaf cultivated in a nursery pot was used in the same manner as in Example 1. In the cultivation environment in the laboratory, the light period was 12 hours, the dark period was 12 hours, the temperature was 24 to 27°C, the humidity was 40 to 70%, and the carbon dioxide concentration was 400 to 500 ppm. A light source (not shown) for the light period was a mixture of red, blue, and white LEDs installed above the plant body, and the photosynthetically active radiation (PAR) on the leaf surface was 600 µmol/m²/s. A specific measurement configuration is shown in Fig. 4. As shown in Fig. 4, one side of the leaf was opened, and a part of the other side was covered with the container 20 to form the space 30. In the space 30, EVAL_CO2_5V_SENSOR2GO (Infineon Technologies AG) was disposed as the sensor 40 for measuring the carbon dioxide concentration. In addition, the carbon dioxide concentration, temperature, and humidity in the external environment were measured with a wireless data logger (RTR-576-S, T&D Corporation), and the evapotranspiration was calculated as a difference by measuring the weight of the nursery pot of the sunflower at 5:00 AM and 5:00 PM every day with an electronic balance (A&D Company, Limited). The watering was performed before and after the light period every day, but the watering was interrupted after the light period on the second day, and the watering was resumed before the light period on the sixth day. The measurement results of the carbon dioxide concentration in the space are shown in Fig. 5, and the evapotranspiration is shown in Table 2 below.

**Table 2**

| **First day** | | **Second day** | | **Third day** | | **Fourth day** | | **Fifth day** | | **Sixth day** | | **Seventh day** | | **Eighth day** | | **Ninth day** | |
|---|---|---|---|---|---|---|---|---|---|---|---|---|---|---|---|---|---|
| **Day** | **Night** | **Day** | **Night** | **Day** | **Night** | **Day** | **Night** | **Day** | **Night** | **Day** | **Night** | **Day** | **Night** | **Day** | **Night** | **Day** | **Night** |
| | **177** | **406** | **160** | **390** | **72** | **330** | **50** | **286** | **22** | **262** | **54** | **346** | **58** | **436** | **72** | **428** | **92** |

As shown in Fig. 5, the carbon dioxide concentration (Cᵢ) increased from around the night of the second day when the watering was interrupted, peaked on the night of the sixth day, and gradually decreased after the seventh day. Specifically, when the reference value was 1,922 µmolmol⁻¹ as in Example 1, the concentration exceeded the reference value from around the night of the fourth day, and it can be determined that the plant was under water stress. It is also found that the water stress increased thereafter, and after watering on the sixth day, gradually decreased from the seventh day. As shown in Table 2, it can also be seen that the evapotranspiration gradually decreased from the night of the second day and gradually increased from the night of the seventh day.

### (Comparative Example)

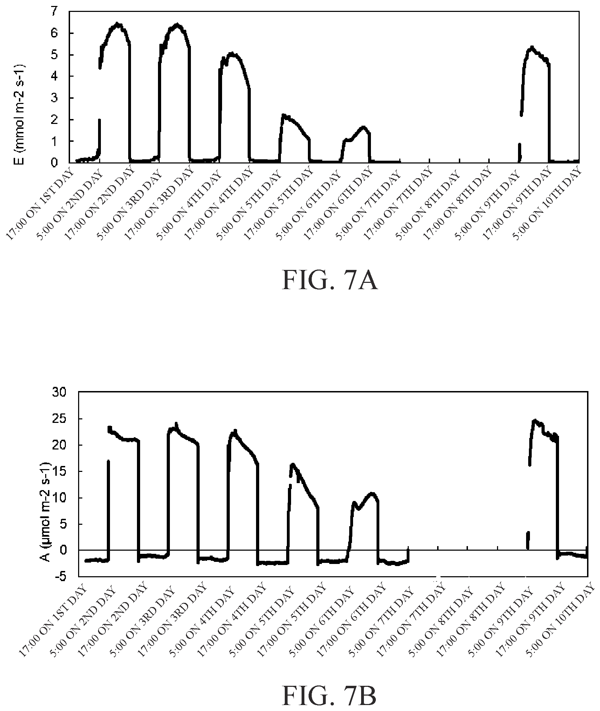

In addition, as a comparative example, the transpiration rate (E) and the assimilation rate (A) of carbon dioxide in a leaf of a plant were measured as indices of water stress using the method disclosed in Patent Literature 3, which is a conventional method. The transpiration rate (E) and the assimilation rate (A) of carbon dioxide decrease as water stress increases, contrary to the concentration (Cᵢ) of carbon dioxide. Here, the transpiration rate (E) and the assimilation rate (A) of carbon dioxide were continuously measured using the above-described plant photosynthesis comprehensive analysis system LI-6800 in a different leaf of the same sunflower used in Example 2. However, the measurement was performed in an external environment in the same manner as in Example 2 without performing the environment control (temperature, humidity, and carbon dioxide concentration) with LI-6800. The conditions for the light period were also the same as described above; that is, the light source was a mixture of red, blue, and white LEDs installed above the plant body, and the photosynthetically active radiation (PAR) on the leaf surface was 600 µmol/m²/s. Specifically, as shown in Fig. 6, the lower portion of the chamber 51 of the plant photosynthesis comprehensive analysis system LI-6800 as the environment control device 50 was removed, and a part of the leaf 10 to be measured was covered. In addition, an acrylic plate 60 was placed on the opposite side of the covered portion. In this comparative example, the plant photosynthesis comprehensive analysis system LI-6800 was used not for environment control but only for measurement as described above. The results of continuous measurement of the transpiration rate (E) and the assimilation rate (A) of carbon dioxide by the method described in Patent Literature 3 are shown in Fig. 7A and Fig. 7B. The watering was performed before and after the light period every day, but the watering was interrupted after the light period on the second day, and the watering was resumed before the light period on the sixth day. In the comparative example, for the convenience of the experiment, the measurement was not performed from 5:00 on the seventh day to 5:00 on the ninth day.

As shown in Fig. 7A and Fig. 7B, the transpiration rate (E) and the assimilation rate (A) of carbon dioxide measured in the comparative example, which is a conventional method, were reduced day by day from the second day to the sixth day during which the watering was interrupted. Then, both the values increased again after the watering. That is, the transpiration rate (E) and the assimilation rate (A) of carbon dioxide in the comparative example showed that the water stress increased after the interruption of watering and the water stress decreased after the restart of watering, similarly to the concentration (Cᵢ) of carbon dioxide in Example 2. As described above, since the result of Example 2 and the result of the comparative example showed similar behavior, the accuracy of the determination of the presence or absence of water stress in the method for diagnosing stress according to the present invention could be confirmed.

From the above results, the method for diagnosing water stress according to the present invention provides a method for diagnosing water stress that enables easy determination of whether a plant is under water stress to be diagnosed without damaging the plant body and without using a system having a complicated configuration.

### REFERENCE SIGNS LIST

- 10: Leaf
- 11: Stoma
- 12: Stem
- 20: Container
- 30: Space
- 40: Sensor
- 50: Environment control device
- 51: Chamber
- 60: Acrylic plate

## Claims

1. A method for diagnosing water stress in a plant, comprising:
a step of covering at least a part of a leaf of a plant with a container to form a space between the container and the leaf;
a step of bringing a concentration of carbon dioxide inside the space and a concentration of carbon dioxide inside the leaf into equilibrium;
a step of measuring the concentration of carbon dioxide inside the space; and
a step of determining the plant is under water stress when the concentration of carbon dioxide inside the space measured in a dark condition is higher than a reference value.

2. The method for diagnosing water stress in a plant according to claim 1, wherein in the step of measuring the concentration of carbon dioxide inside the space, the concentration of carbon dioxide is continuously measured to derive a temporal change in the concentration of carbon dioxide.

3. The method for diagnosing water stress in a plant according to claim 1 or 2, wherein the reference value is a reference value determined based on a dark respiration rate of the leaf of the plant to be measured.

4. The method for diagnosing water stress in a plant according to claim 2, wherein the reference value is determined according to the temporal change.

5. The method for diagnosing water stress in a plant according to claim 1 or 2, wherein the reference value is determined by at least one of Formulae (2) and (3) below: $reference value = {C}_{a} + 1.6 {R}_{dark} / \left({g}_{dark}-{g}_{cut}\right)$ $reference value = {C}_{a} + 1.6 {R}_{dark} / \left({g}_{min}-{g}_{cut}\right)$ (in Formulae (2) and (3), Cₐ represents a concentration of carbon dioxide in atmosphere, R_{dark} represents a dark respiration rate, g_{dark} represents a water vapor conductance in the dark condition of the leaf without water stress, g_{cut} represents a water vapor conductance of cuticle, and gₘᵢₙ represents a water vapor conductance of the leaf that has lost turgor pressure, respectively).

6. A plant water stress diagnosis system used for the method for diagnosing water stress in a plant according to claim 1, the system comprising:
a container configured to cover at least a part of one surface of a leaf of a plant to form a space with the leaf;
a sensor in communication with the space to measure a carbon dioxide concentration in the space; and
a blower and a condenser configured to circulate air between the space and the sensor.
